Europäisches Patentamt

European Patent Office

Office européen des brevets

(11) Veröffentlichungsnummer : **0 023 005**
**B1**

(12) **EUROPÄISCHE PATENTSCHRIFT**

(45) Veröffentlichungstag der Patentschrift :
22.09.82

(21) Anmeldenummer : **80104054.4**

(22) Anmeldetag : **12.07.80**

(51) Int. Cl.³ : **B 21 D 39/04**, B 23 P 19/02

(54) **Presszange zur Herstellung einer dichten Rohrverbindung.**

(30) Priorität : 18.07.79 CH 6669/79

(43) Veröffentlichungstag der Anmeldung :
28.01.81 (Patentblatt 81/04)

(45) Bekanntmachung des Hinweises auf die Patenterteilung : 22.09.82 Patentblatt 82/38

(84) Benannte Vertragsstaaten :
**AT DE FR GB IT SE**

(56) Entgegenhaltungen :
**DE A 2 252 096**
**US A 3 019 520**
**US A 3 124 874**
**US A 3 334 510**
**US A 3 474 519**

(73) Patentinhaber : **GEORG FISCHER AKTIENGESELL-
SCHAFT**
**Mühlentalstrasse 105**
**CH-8201 Schaffhausen (CH)**

(72) Erfinder : **Baumann, Gerhard**
**Floraweg 17**
**CH-8200 Schaffhausen (CH)**

Imprimerie Jouve, 18, rue St-Denis, 75001 Paris, France

EP 0 023 005 B1

# Presszange zur Herstellung einer dichten Rohrverbindung

Die Erfindung betrifft eine Presszange gemäss dem Oberbegriff des Anspruches 1.

Zum Verbinden von insbesondere dünnen Stahlrohren wird seit einigen Jahren das eine Rohrende zu einer Muffe aufgeweitet und das andere Rohrende, über das ein Ring verschoben ist, in die Muffe eingeschoben und dann der Ring über das äussere Rohr gepresst. Dadurch wird das äussere Rohr gegen das innere Rohr derart fest angedrückt, dass eine dichte, dauerhafte Verbindung entsteht.

Eine derartige Rohrverbindung ist z.B. in der FR-A-1 140 797 beschrieben.

Die Herstellung einer solchen Verbindung ist wegen der bei Stahlrohren erforderlichen, hohen Anpresskraft, nicht unproblematisch. Da die erforderliche Kraft bei Rohren mit einem Durchmesser von 10-35 mm im Bereich von etwa 10 bis 30 kN liegt, ist die Verwendung eines handbetätigten Werkzeuges zum Aufpressen des Ringes praktisch nicht möglich.

In der US-A-3 474 519 (Fig. 9) ist ein hydraulisch betätigtes Werkzeug zum Aufpressen von zwei Ringen zur Herstellung einer Rohrverbindung dargestellt. Dieses Werkzeug ist etwa gabelförmig ausgebildet und mit zwei Zinken versehen, von welchen die eine an der anderen gelagert und Mittels eines hydraulischen Antriebsaggregates zur anderen hin und von dieser weg schwenkbar ist. Die beiden Spitzen her Zinken sind mit innen teilkreisförmigen Elementen versehen, die zum Anlegen an zwei Stirnflächen der Ringe bestimmt sind.

Diese bestehende Ausführung ist mit verschiedenen Nachteilen behaftet, in dem sie beispielsweise nur zum gleichzeitigen Aufpressen von zwei Ringen ausgelegt und somit zum Aufpressen von nur einem Ring nicht geeignet ist. Beim Aufpressvorgang beschreiben ferner die Spitzen der Zinken eine teilkreisförmige Bahn, so dass der Druck auf die Stirnflächenteile während des Pressvorganges variiert. Infolgedessen entsteht die Gefahr, dass die Ringe schief aufgezogen, oder dass das Rohr am Umfang ungleichmässig zusammengedrückt wird.

Ein weiterer Nachteil besteht darin, dass die Elemente mit dem Werkzeug einstückig ausgebildet sind, so dass es nur für einen bestimmten Rohrdurchmesser geeignet ist. Für jeden Rohrdurchmesser muss deshalb ein separates Werkzeug verwendet werden. Ferner ist die Verwendung der bekannten Ausführung z.B. für T-förmige Rohrabzweigungen und somit für normale Rohranlagen nicht möglich. Bei Abnutzungen oder Beschädigungen der Elemente muss das ganze Werkzeug ersetzt werden. Bei Rohrmontagen an Baustellen müssen getrennte Werkzeuge für die unterschiedlichen Rohrdurchmesser mitgeführt werden.

Infolge der Auslegung der Werkzeuges wird es, z.B. wegen der langen, gabelförmigen Ausbildung und den auftretenden Kräften, sowie weil das Element einstückig mit dem Werkzeug ausgebildet ist, ziemlich schwer und unhandlich.

In der US-A-3 019 520 ist eine derartige Ausführung beschrieben, bei der zwei Rohrenden von denen das eine mit einer Muffe versehen ist, zusammengepresst werden. Bei dieser Ausführung ist kein Ring zur Erhöhung des Druckes am Rohrumfang vorgesehen. Es wird somit angenommen, dass die Presszange einen relativ grossen Druck ausüben muss, um eine ausreichende Wirkung zu erreichen. Weil dieser Ring fehlt, ist es schwer eine Presszange herzustellen, die eine ausreichend starke Zusammendrückung der Muffer zur Herstellung einer dichten Rohrverbindung bewirkt, die auch bei hohem Innendruck im Rohr haltbar bleibt .

Ein weiterer Nachteil dieser Ausführung besteht darin, dass der eigentliche Presskörper nur relativ schwer an die Rohre ansetzbar ist. Infolgedessen ist diese Ausführung für schwer zugängliche Stellen nicht besonders gut geeignet.

Ferner ist der Aufbau des Elementes relativ kompliziert.

Aufgabe der Erfindung ist die Schaffung einer Presszange zur Herstellung einer dichten Rohrverbindung, welche Presszange die Nachteile bestehender Ausführungen nicht aufweist.

Dabei soll die Presszange u.a.

— für einen geringen Kraftaufwand ausgelegt sein,

— möglichst leicht sein,

— für einen möglichst grossen Rohrdurchmesserbereich verwendbar sein, und

— für einen Wechsel des Rohrdurchmessers rasch und zuverlässig veränderbar sein.

Diese Aufgabe ist mit der Lehre gemäss dem gekennzeichneten Teil des Anspruches 1 gelöst.

Ausführungsformen dieser Lehre sind in den weiteren, abhängigen Ansprüchen beschrieben.

Durch die beschriebene Lösung der gestellten Aufgabe ergeben sich u.a. die folgenden Vorteile.

— Mit der gleichen, einfachen Presszange können mehrere Rohrdurchmesser verarbeitet werden.

— Für Arbeiten an einer Baustelle wird nur eine Presszange für die auftretenden Rohrdurchmesser benötigt.

Dadurch ergeben sich Einsparungen im Einkauf, Transport und Lagerung.

— Infolge der Trennung der Presszange vom Element, wird diese viel leichter und handlicher.

— Die Einrichtung ist für einen Pressvorgang zwischen einer Muffenschulter und einem Ring geeignet, so dass von einer Verbindung mittels zweier Ringe abgesehen werden kann. Dadurch wird das Verbinden einfacher und stabiler.

— Die Trennung zwischen der Presszange um dem Element ermöglicht eine sehr genaue Bearbeitung des Elementes, so dass es dem Rohrdurchmesser und der Muffenschulter sehr genau angepasst werden kann.

— Das genaue Anlegen der Einrichtung an eine zusammengeschobene Rohrverbindung erhöht die Genauigkeit der Verbindung.

— Die Ausführung gewährleistet ein sicheres Anlegen der Einrichtung sowohl an der Muffenschulter als auch an den Ring, wobei für das Anlegen keine hohe Schulter erforderlich ist.

— Wegen der vorzugsweisen unterschiedlichen Ausbildung der beiden, zum Anlegen an die Muffenschulter oder den Ring dienenden Flächen des Elementes ist eine einfache Überprüfung des richtigen Anlegens des Elementes an ein Rohr leicht möglich indem z.B. das Element nicht richtig schliesst, sofern es falsch angelegt wurde.

Nachfolgend werden Ausführungsbeispiele der erfindungsgemässen Presszange anhand der Zeichnung näher erläutert.

Es zeigen :

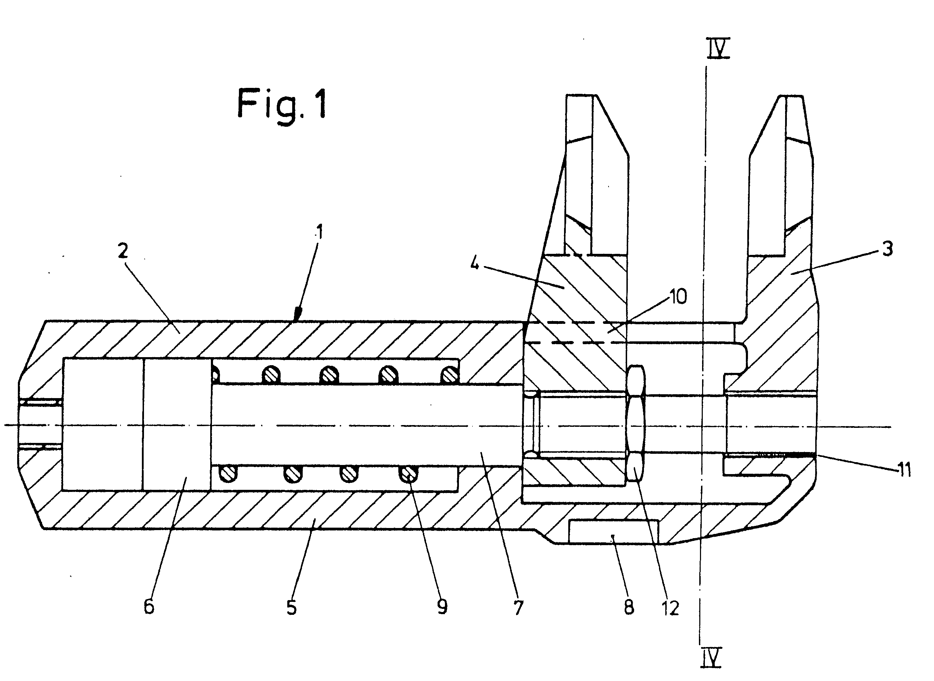

. Figur 1  einen Längsschnitt durch eine Presszange gemäss einer ersten Ausführungsform,

Figur 2  einen Längsschnitt durch ein an zwei zu verbindenden Rohren anlegbare Klemmbacken-Element in axial auseinanderliegenden Stellung und mit nicht aufgepresstem Ring,

Figur 3  wie Fig. 2, jedoch in zusammengeschobener Stellung mit aufgepresstem Ring,

Figur 4  einen Schnitt längs der Linie IV-IV in Fig. 1,

Figur 5  eine Seitenansicht der Presszange nach Fig. 1, jedoch gemäss einer zweiten Ausführungsform,

Figur 6  eine Seitenansicht eines Elementes in betriebsbereiter Stellung, mit in der Achsrichtung auseinanderliegenden Backen,

Figur 7  wie Fig. 6, jedoch mit in der Achsrichtung zusammengeschobenen Backen,

Figur 8  eine Stirnansicht eines Elementes mit Backen in geschlossener Stellung, und,

Figur 9  wie Fig. 8, jedoch in offener Stellung.

In Fig. 1 ist eine Presszange 1 mit einem Kolben-/Zylinderaggregat 2 und zwei Gabeln 3 und 4 dargestellt. Die erste Gabel 3 ist mit dem Zylindergehäuse 5 einstückig ausgebildet, während die zweite Gabel 4 mit dem Kolben 6 verbunden ist und sich mit der Kobenstange 7 bewegt. Der Kolben 6 wird normalerweise hydraulisch von einer nicht dargestellten Hydraulikquelle aus betätigt, die eine elektrisch angetriebene Hydraulikpumpe einschliesst.

Beim Einschalten der Presszange 1 wird die zweite Gabel 4 gegen die erste 3 bewegt. Das Einschalten kann z.B. mittels eines an der Presszange 1 angeordneten Schalters 8 oder eines Fusschalters erfolgen. Die Aussenfläche des Zylinders 5 kann als Griff ausgebildet und mit einer Schicht, z.B. aus Kunststoff versehen sein.

Wenn die vorgesehene Wegstrecke zurückgelegt ist, steht die Presszange 1 automatisch nicht mehr unter Druck, so dass kein übermässiger Druck auf die Gabel 3, 4 ausgeübt wird. Diese Entspannung kann mittels eines Druckentlastungsventils oder eines Druck- oder Endschalters erfolgen. Danach wird der Kolben 6 mittels einer daran angeordneten Feder 9 in seine Ausgangslage zurückgeführt, so dass der Kolben 6 für einen weiteren Pressvorgang bereit ist.

Beim Verschiebevorgang wird die zweite Gabel 4 an zwei Stellen geführt. Damit keine Drehbewegung entsteht, ist sie an der Stelle 10 an einer Längsrinne an der Aussenwandung zur Gabel 3 geführt. Ferner wird eine Biegung der Kolbenstange 7 dadurch verhindert, dass sie in einer Büchse 11 im verlängerten Teil des Kolbengehäuses 5 gelagert und darin verschiebbar ist.

Die zweite Gabel 4 ist auf der Kolbenstange 7 drehfest gehalten und mittels einer Mutter 12 daran befestigt.

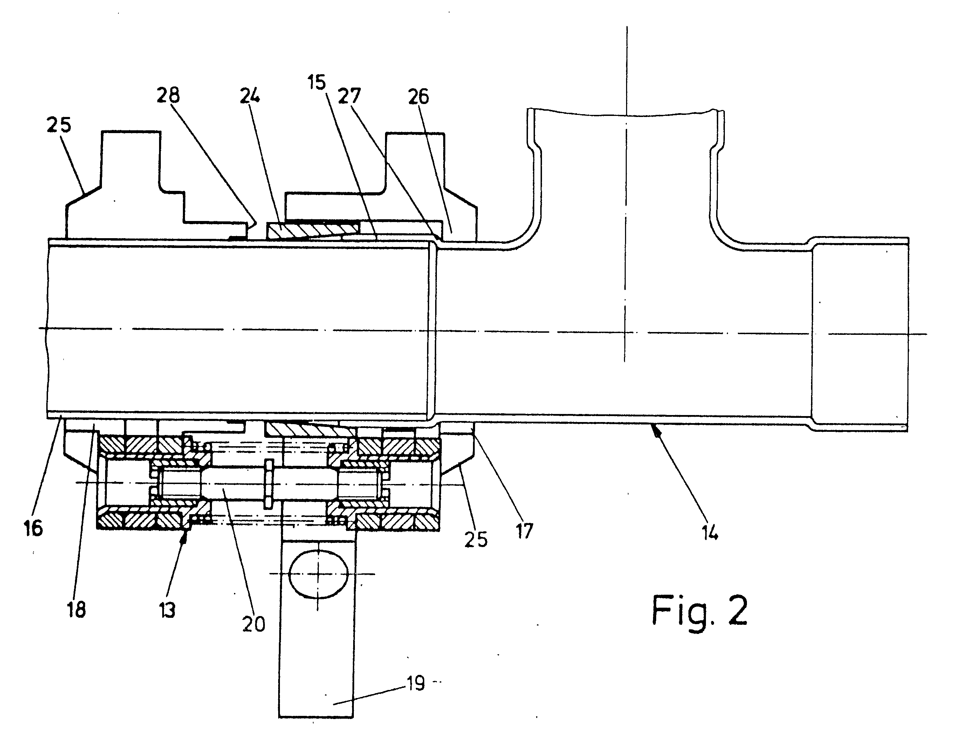

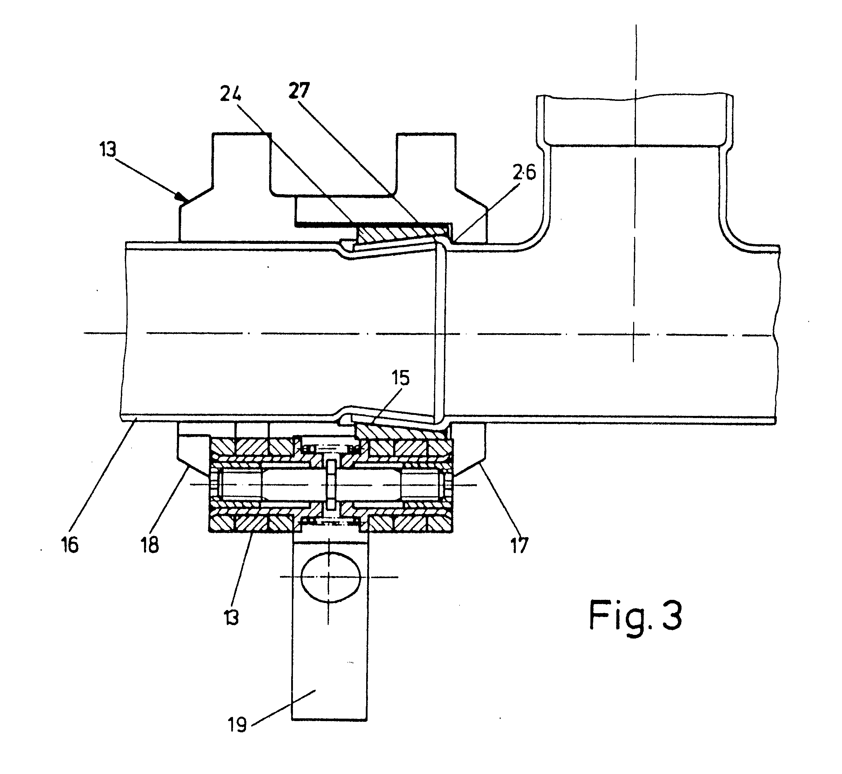

Für den Aufpressvorgang wird ein Einsatz in Form eines Klemmbacken-Elements 13 benötigt, das in den Fig. 2 und 3 dargestellt ist. In dieser Darstellung ist gezeigt, wie ein Rohrende 15 eines T-förmigen Rohrstücks 14, mit einem Rohr 16 verbunden werden kann.

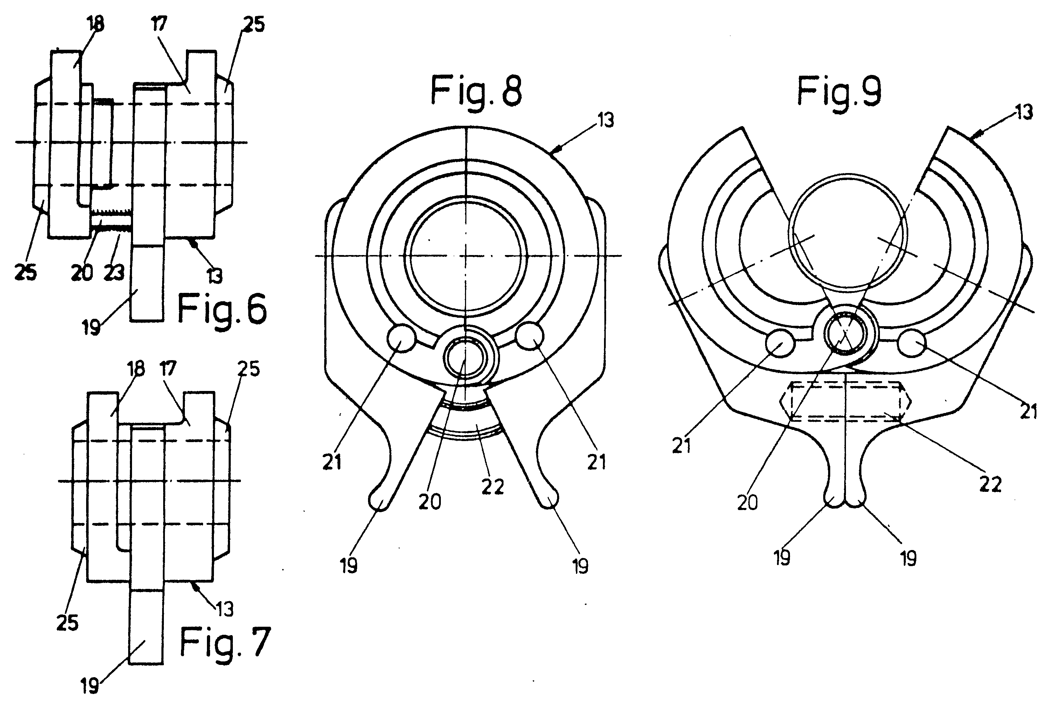

Das Element 13 ist in den Fig. 6 bis 9 detailliert dargestellt und besteht aus zwei, innen Kreisförmigen Backenpaaren 17 und 18, die mittels zweier Hebel 19 um eine Achse 20 schwenkbar sind. Die beiden Hebel 19 sind am ersten Backenpaar 17, und zwar jeweils an deren beiden Backen befestigt und die Schwenkbewegung wird mittels zweier Zapfen 21 (Fig. 8 und 9) auf die zweite Zange (Backenpaare 18) übertragen. Die Backenpaare 17 und 18 sind mittels einer Feder 22 in der geschlossenen Stellung vorgespannt. In offener Stellung (Fig. 9) sind die Backenpaare 17, 18 derart weit geöffnet, dass das Rohrende 15 und das Rohr 16 zwischen den Backen eingeschoben werden kann. In geschlossener Stellung liegen die Backen 17, 18, die einen kreisrunden Raum berenzen, um den ganzen Umfang des Rohrendes 15 bzw. des Rohres 16 an.

Die Achse 20 und die beiden Zapfen 21 sind derart ausgebildet, dass sie eine Bewegung zwischen den in den Fig. 6 und 7 gezeigten Stellungen zulässt. Rund um die Achse 20 ist eine Schraubenfeder 23 angeordnet, welche die beiden Backenpaare 17, 18 von einander weg vorspannt.

Zur Herstellung einer Rohrverbindung wird das Element 13 geöffnet und über das Rohrende 15 und das Rohr 16 angeordnet, nachdem zuerst die beiden Rohre 15, 16 ineinander verschoben und ein Ring 24 über die äussere Kante des Rohrendes 15 gelegt worden ist. Dann wird die Presszange 1 derart über das Element 13 gelegt, dass seine beiden Enden zwischen den Gabeln 3, 4 zu liegen kommen. Diese beiden Enden sind mit sich vom Element 13 weg nach aussen verjüngenden, kegelstumpfförmigen Flächen bzw. Vorsprüngen 25 versehen, die in entsprechend ausgebildeten Vertiefungen an den beiden Gabeln 3, 4 zu liegen kommen. Dadurch wird erreicht, dass die Flächen 25, 26 des Elementes 13 beim Pressen form- bzw. kraftschlüssig in die Gabel 3, 4 eingreifen und von ihnen gehalten werden. Die Backen 17, 18 werden deshalb beim Pressvorgang in geschlossener Stellung gehalten. Eine genaue Bearbeitung der beiden ineinander eingreifenden Flächen der Gabel 3, 4 und des Elements 13 bewirkt, dass es genau in der Längsrichtung der Rohrverbindung zusammengepresst wird.

Die Anordnung der Backenpaare 17, 18 um die herzustellende Rohrverbindung ist in Fig. 2 gezeigt. Der eine Rohrstutzen 15 des T-förmigen Rohrstückes 14 ist zu einer Muffe ausgeweitet. Die innere Kante 26 des einen Backenpaares 17 wird dabei an die Muffenschulter 27 angelegt, während die innere Kante 28 des anderen Paares 18 ausserhalb des Ringes 24 angeordnet wird. Beim Pressvorgang wird das zweite Backenpaar 18 gegen das erste 17 verschoben, so dass eine fertige Rohrverbindung entsteht (Fig. 3). Aus dieser Fig. geht hervor, dass der mit einer kegelstumpfförmig verlaufenden Innenfläche versehene Ring 24 den Rohrstutzen 15 entsprechend verformt, so dass auch das Rohr 16 eine entsprechende Form erhält. Dadurch entsteht eine keilförmige Verbindung zwischen den Teilen 15, 16, 24. Durch diese Verformung entstehen Kräfte, welche die entstandene Verbindung zusammenhalten.

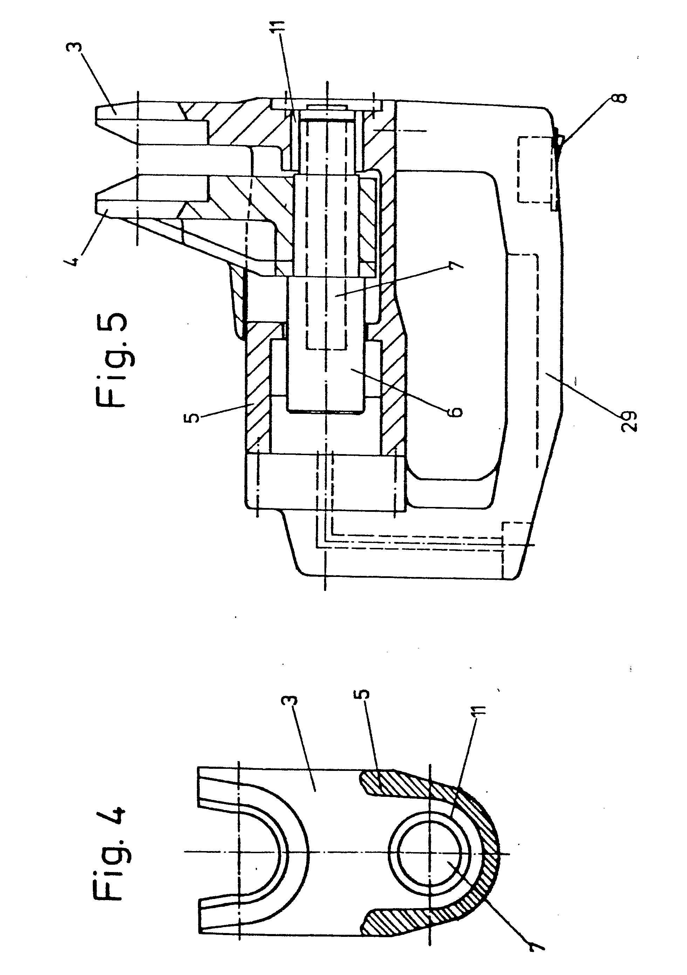

Die in Fig. 5 gezeigte Ausführung entspricht derjenigen nach Fig. 1 mit Ausnahme des Griffes 29, der hier ringförmig ausgebildet ist, wobei der Schalter 8 für Betätigung mittels des Daumens angeordnet ist. Der Griff 29 besteht vorzugsweise aus Aluminiumguss.

Um Gewicht zu sparen bestehen die verschiedenen Teile aus möglichst leichten und harten Materialien. Die Backenpaare 17, 18 sind z.B. aus Werkzeugstahl angefertigt, während die beiden Hebel 19 aus Aluminium bestehen können. Das Kolbengehäuse 5 und die beiden Gabeln können aus Stahlguss bestehen.

Ein wichtiger Vorteil der beschriebenen Ausführung ist die Tatsache, dass die gleiche Presszange 1 für Elemente 13 für unterschiedliche Rohrdurchmesser verwendbar ist. Ein weiterer Vorteil besteht darin, dass die beiden Vorrichtungen 1, 13 vollständig getrennt sind, so dass das zu hebende Gewicht bei der Arbeit stark reduziert wird.

Um ein sicheres und genaues Eingreifen des Elements 13 an der Muffenschulter 27 und an der Stirnfläche des Ringes 24 zu garantieren ist es für das Anlegen an der Muffenschulter 27 und an den Ring 24 zweckmässig unterschiedlich ausgebildet. Das hat zur Folge, dass das Element 13 nicht vollständig schliesst, sofern es falsch angelegt sein sollte. Deshalb ist ein falsches Anlegen leicht sichtbar.

Für das Anlegen des Elementes 13 ist keine grosse Muffenschulter 27 erforderlich, sondern diese kann relativ klein ausgebildet sein. Die beiden Hebel des Elements 13 können beim Pressvorgang eine beliebige Lage relativ zur Presszange 1 aufweisen, so dass die Zugänglichkeit gewährleistet ist.

Die zu verbindenden Flächen des Rohres und der Muffe können vor dem Pressvorgang, nach evtl. vorheriger Entfettung, mit Klebstoff versehen werden, um die Rohrverbindung noch fester zu gestalten. Für eine dichte Verbindung ist aber kein Klebstoff erforderlich, sofern die Rohroberflächen eine nicht zu starke Rauhigkeit aufweisen.

Der Ring besteht normalerweise aus Edelstahl, der in Verbindung mit Stahl oder Kupfer keine Korrosion verursacht oder begünstigt.

Während dicke Rohre aus Edelstahl verschweisst werden können, ist dies bei dünnen Rohren schwer durchführbar, und insbesondere für diese Rohre ist die beschriebene Einrichtung vorgesehen.

Als Kraftquelle für die Presszange ist eine hydraulische Vorrichtung mit einem Maximaldruck von z.B. 200 bar vorgesehen. Es können aber auch pneumatische oder elektrische Kraftquellen und auch höhere Druckkräfte verwendet werden.

Die Berührungsfläche der Presszange 1 mit dem Element 13 erstreckt sich kreisförmig über vorzugsweise 180° oder mehr.

**Ansprüche**

1. Presszange (1) zur Herstellung einer dichten Rohrverbindung zwischen zwei Rohren (14, 16), von denen eines zur Aufnahme des anderen zu einer Muffe erweitert ist, mittels eines die Muffe des einen Rohres gegen die Aussenfläche des anderen Rohres unter der Wirkung einer hydraulischen Kraftquelle pressenden, axial verschiebbaren Ringes (24) mit kegelstumpfförmiger Innenfläche, bei der zwei Backenpaare (17, 18) mechanisch miteinander verbunden um ein und dieselbe geometrische Achse gemeinsam zu öffnen und zu schliessen, sowie gegeneinander gegen die Wirkung einer Vorspannfeder (23) axial verschiebbar sind und bei der das eine Backenpaar (17) mit einer in Anlage mit der Muffenschulter (27) kommenden Kante (26) und bei der das andere Backenpaar (18) mit einer in Anlage mit dem Ring (24) kommenden Kante (28) versehen ist, dadurch gekennzeichnet, dass die Backenpaare (17, 18) Teil eines von der Presszange (1) trennbaren Klemmbacken-Elementes (13) sind und dass die Presszange (1) zwei Gabeln (3, 4) aufweist, in deren Ausnehmungen das Klemmbacken-Element (13) mit an seinen Enden vorgesehenen, vom Rohrdurchmesser unabhängigen kegelstumpfförmigen Vorsprüngen (25) formschlüssig einsetzbar ist, wobei die Backen eines jeden Backenpaares (17, 18) gegeneinander und um die gemeinsame Achse (20) vorgespannt sind.

2. Presszange nach Anspruch 1, dadurch gekennzeichnet, dass die Backenpaare (17, 18) mittels eines einzigen Hebelpaares (19) zu öffnen und zu schliessen sind.

3. Presszange nach Anspruch 1, dadurch gekennzeichnet, dass die Ausnehmung der Gabeln (3, 4) in der Umfangsrichtung teilkreisförmig ist und sich um 180° oder mehr erstreckt.

4. Presszange nach Anspruch 1, dadurch gekennzeichnet, dass der Ring (24) der Rohrver-

## Claims

1. Squeeze device for making a tight tube joint between two tubes (14, 16), one of which being widened to a socket for receiving the other tube therein, the socket being pressable against the inner tube by means of a power operated sliding ring (24) with conic inner surface, with two pairs of jaws (17, 18) being mechanically interconnected for common closure and opening about the same geometrical axis, the jaws being axially slideable towards each other against the force of a bias spring (23), whereby one of the pair of jaws (17) being provided with an edge (26) for support against the socket shoulder (27), while the other pair of jaws (18) is provided with an edge (28) for action against the ring (24), characterized in that the pair of jaws (17, 18) are parts of a jaw element (13) separable from the device, and that the device (1) has two forks (3, 4), in the recesses of which the jaw elements (13) with their conic projections (25) at their ends, independent of the tube diameter, are formlocking receivable, whereby the jaws of any pair of jaws (17, 18) are biased against each other about a common axis (20).

2. Device according to claim 1, characterized in that the pairs of jaws (17, 18) can be opened or closed by means of a single pair of levers (19).

3. Device according to claim 1, characterized in that the recess of the forks (3, 4) is extending over 180° or more of a circle.

4. Device according to claim 1, characterized in that the ring (24) of the tube joint is made of high-grade steel.

## Revendications

1. Pince-presse pour la production d'un raccordement de tuyaux étanche entre deux tuyaux (14, 16) dont l'un est élargi en un manchon pour la réception de l'autre, au moyen d'une bague (24) présentant une surface intérieure tronconique, pouvant coulisser axialement et qui comprime le manchon de l'un des tuyaux contre la surface extérieure de l'autre tube sous l'action d'une source de force hydraulique, dans laquelle deux paires de mâchoires (17, 18) sont reliées mécaniquement l'une à l'autre pour ouvrir ou fermer conjointement un seul et même axe géométrique, ainsi que capables de coulisser axialement l'une par rapport à l'autre en surmontant l'action d'un ressort de précontrainte (23) et dans laquelle l'une des paires de mâchoires (17) est munie d'un bord (26) qui vient en appui contre l'épaulement (27) du manchon et dans laquelle l'autre paire de mâchoires (18) est munie d'un bord (28) qui vient en appui contre la bague (24), caractérisée en ce que les paires de mâchoires (17, 18) font partie d'un élément à mâchoires de serrage (13) qui peut être séparé de la pince-presse (1) et en ce que la pince-presse (1) présente deux fourchettes (3, 4) dans les évidements desquels l'élément (13) à mâchoires de serrage peut être engagé, avec liaison par forme, par des saillies tronconiques (25) indépendantes du diamètre du tube qui sont prévues à ses extrémités, les mâchoires de chaque paire de mâchoires (17, 18) étant sollicitées avec précontrainte pour se rapprocher l'une de l'autre, en pivotant autour de l'axe commun (20).

2. Pince-presse suivant la revendication 1, caractérisée en ce que les paires de mâchoires (17, 18) peuvent être ouvertes et fermées au moyen d'une seule paire de leviers (19).

3. Pince-presse suivant la revendication 1, caractérisée en ce que l'évidement des fourchettes (3, 4) est en forme de partie de cercle dans la direction circonférentielle et s'étend sur 180° ou plus.

4. Pince-presse suivant la revendication 1, caractérisée en ce que la bague (24) du raccordement de tuyaux est réalisée en acier fin.

Fig.1

0 023 005

Fig. 2

0 023 005

0 023 005

Fig.3

3

Fig. 5

Fig. 4

Fig.8

Fig.9

Fig.6

Fig.7

0 023 005